# EUROPEAN PATENT APPLICATION

(11) **EP 0 525 672 A2**
(43) Date of publication of application: **03.02.1993**
(21) Application number: 92112695.9
(22) Date of filing: 24.07.1992
(51) Int. Cl.: G06F 11/00

(54) **Microprocessor with program tracing**

(30) Priority: 24.07.1991 JP 184244/91
(71) Applicant: NEC CORPORATION, Tokyo (JP)
(72) Inventor: Arai, Tomohisa, c/o NEC Corporation, Minato-ku, Tokyo (JP)
(74) Representative: Betten & Resch

(57) **Abstract**

A microprocessor according to the present invention includes a start detector. The start detector monitors operation of an execution unit, and supplies an instruction step signal to a tracer at each time when an execution start of each instruction is detected thereby. The tracer traces a program executed in the execution unit in accordance with the instruction step signal.

## Description

### FIELD OF THE INVENTION

This invention relates to a microprocessor, and more particularly to, a microprocessor which is provided with a cache memory for caching an instruction code, a memory operand or the like.

### BACKGROUND OF THE INVENTION

There are three methods for debugging a program of a microprocessor, that is "trace", "trap" and "single step" which are used in developing a system or a program for a microprocessor, as follows.

### 1. TRACE

Information of an executing position of the program and information of an access of a memory operand are monitored, and the sequence of the executed program and the access state of the memory operand are checked in accordance with the monitored information. The information generally consists of address, data and status at a bus- cycle, which can be detected at external terminals of the microprocessor.

As described above, the information can be detected at the outside of the microprocessor, so that trace can be carried out even if the microprocessor has no special function for tracing. In debugging, the program is not necessary to be interrupted by occurrence of an interruption and of an exception, and operation is not necessary to waite a bus cycle. Therefore, the timing does not change between debugging mode and non-debugging mode.

A trace is carried out passively, because a debugging program is not interrupted, even if a specific status is detected during the debugging.

### 2. TRAP

When an instruction code of a predetermined address is conducted or a memory operand of a predetermined address is accessed, the control is transferred to the trap program, and a detailed debugging is started to be carried out therein. Therefore, according to a trap function, it is advantageously possible to carry out debugging at a specific time. Consequently, however, it is necessary to be provided with a hardware mechanism for carrying out an interruption and an exception precisely at the predetermined address, and for shifting operation to a debugging program. That is, for example, they have to occur immediately after or before the execution of the instruction code having the predetermined address.

On the other hand, the trap mode has following disadvantages. That is, an execution sequence of the program is necessary to be known precisely, and the execution of the sequence program can not be interrupted where the trap is not carried out at a predetermined timing (for instance, where a program overruns prior to the trap).

### 3. SINGLE STEP

Debugging program is executed at each time when one instruction of a sequence program is executed, and on internal state of a microprocessor (general register, processor status word, program counter, etc. ) is indicated to be monitored. In some case, the sequence program is executed with changing a part of the program. According to the single step function, therefore, detailed execution state of the sequence program can be monitored. However, the microprocessor needs to have a hardware mechanism for generating interrupt and / or exception at each time of the execution of one instruction to shift operation to the debugging program, as generally defined "single step interrupt". Further, an execution efficiency of the sequence program is low, and a timing-critical processing such as a timer routine and the like can not be debugged. Furthermore, internal operation of the microprocessor is quite difference in timing between debugging mode and non debugging mode.

The three kinds of debugging methods have some advantages and disadvantages, as explained above. Accordingly, the debugging is carried out in accordance with the combination of the three methods.
1) Detecting a sequence of instructions to be conducted by the trace method.
2) Shifting the control from a sequence program to a debugging program by the trap method at the vicinity when a problem occurs in the sequence program.
3) Checking execution states of the instructions one by one in detail by the single step method.

Next, a conventional microprocessor will be explained as to how the trace method is carried out.

The conventional microprocessor includes an execution unit for executing an instruction, an instruction decode unit for decoding an instruction code, an instruction cache and a bus cycle control unit.

In the microprocessor, the execution unit supplies an address of a subsequent instruction to the bus cycle control unit, in case that the instruction cache is not used. The bus cycle control unit supplies a status signal of a fetch instruction and an address of the fetch instruction to an external memory, respectively. Then, the bus cycle control unit is supplied with an instruction code corresponding to the instruction address from an external memory, and transfers the instruction code to the instruction decode unit. The instruction decode unit decodes the instruction code, and supplies a control signal to the execution unit. And, the execution unit performs a predetermined process in accordance with the control signal.

The conventional trace method is carried out in the conventional microprocessor by utilizing an external memory, and a tracer which including a trace analyser and a trace memory.

In the trace method, when a status signal and an address signal of a fetch instruction are supplied from the microprocessor to the external memory, the external memory supplies an instruction code to the microprocessor. Then, the microprocessor performs an instruction corresponding to the instruction code. At this time, the trace analyzer monitors the status signal to detect an occurrence of the fetch cycle, and supplies a strobe signal to the trace memory when the status signal is detected thereby. In response to the strobe signal, the trace memory stores an instruction address during the instruction fetch cycle. After that, when all of the instruction addresses are stored in the trace memory, trace of the instruction sequence (fetch cycle) is finished.

On the other hand, in case that the instruction cache is used, the execution unit supplies an address of a subsequent instruction to the instruction cache. At this time, if an instruction code corresponding to the instruction address has been already registered in the instruction cache (hit state), the instruction cache supplies the instruction code to the instruction decoder unit directly. After that, the microprocessor operates in the same manner as the above case that the instruction cache is not used. If an instruction code corresponding to the instruction address has not been registered in the instruction cache (miss-hit state), the instruction cache supplies a predetermined signal to the bus cycle control unit in order that an instruction code corresponding to the instruction address is fetched from the external memory, and the fetched instruction code is registered in the instruction cache. At the same time, the instruction code is supplied to the instruction decoder unit. After that, the microprocessor operates in the same manner as the above case.

According to the conventional microprocessor, however, there is a disadvantage in that a status signal of an instruction fetch cycle can not be detected by the tracer, if an instruction code corresponding to the subsequent instruction has been already registered in the instruction cache (hit state). As a result, it is impossible that a trace of the microprocessor is carried out in such case.

Otherwise, if the instruction cache is controlled to be inactive during the trace and all of the instruction fetches can be externally observed, the above problem can be solved. However, operation of the microprocessor becomes different between an actual operation mode and a trace mode, so that the debugging becomes imprecise.

### SUMMARY OF THE INVENTION

Accordingly, it is an object of the invention to provide a microprocessor in which a program tracing thereof can be carried out precisely in case that an instruction code corresponding to a subsequent instruction has been already registered in an instruction cache.

According to the invention, a microprocessor, includes:
an execution unit for supplying an address of a required instruction, and executing an instruction in accordance with an instruction code supplied thereto;
an internal cache for supplying an instruction code to the execution unit when the address supplied from the execution unit corresponds to an instruction code cached therein; and
a start detector for monitoring operation of the execution unit and supplying an instruction step signal to a predetermined tracer at each time when an execution start of each instruction in the execution unit is detected thereby.

The other objects and features of this invention will become understood from the following description with reference to the accompanying drawings.

### BRIEF DESCRIPTION OF THE DRAWINGS

Fig. 1 is a block diagram showing a conventional microprocessor;
Fig. 2 is a block diagram showing a conventional trace system using for the conventional microprocessor;
Fig. 3 is a block diagram showing a microprocessor of a first preferred embodiment according to the invention;
Fig. 4 is a block diagram showing a trace system using for the first preferred embodiment;
Fig. 5 is a schematic view showing operation of the first preferred embodiment;
Fig. 6 is a block diagram showing a microprocessor of a second preferred embodiment according to the invention; and
Fig. 7 is a block diagram showing a trace system using for the second preferred embodiment.

### DESCRIPTION OF THE PREFERRED EMBODIMENTS

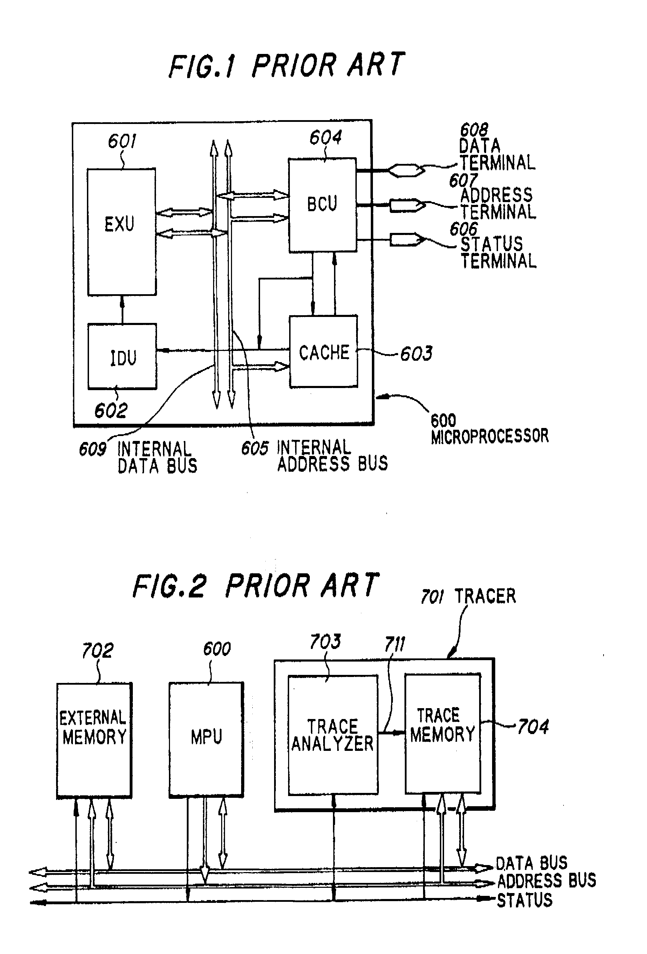

For better understanding the background of the present invention, the basic principle of the conventional technology is first described hereinafter with reference to Figs. 1 and 2.

Fig. 1 shows a conventional microprocessor 600 which includes an execution unit (EXU) 601, an instruction decode unit (IDU) 602, an instruction cache 603 and a bus cycle control unit (BCU) 604.

In the microprocessor 600, the execution unit 601 generates an address of a subsequent instruction, and supplies the address to the bus cycle control unit 604 through an internal address bus 605, in case that the instruction cache 603 is not used. The bus cycle control unit 604 supplies a status signal indicating an instruction fetch cycle to a status terminal 608, and supplies an address of the fetch instruction to an address terminal 607. Then, the bus cycle control unit 604 is supplied with an instruction code from an external memory through a data terminal 608, and supplies the instruction code to the instruction decode unit 602 through an internal data bus 609. The instruction decode unit 602 decodes the instruction code, and supplies a control signal to the execution unit 601. After that, the execution unit 601 performs a predetermined process in accordance with the control signal.

Fig. 2 shows a trace system used for tracing the conventional microprocessor 800, which includes an external memory 702, and a tracer 701 including a trace analyzer 703 and a trace memory 704.

In the trace system, when a fetch instruction is required, a fetch cycle is accessed in the microprocessor 600, so that a status signal and an address signal of the fetch instruction are supplied from the microprocessor 600 to the external memory 702. In response to the status signal and the address signal , the external memory 702 supplies an instruction code corresponding to the address to the microprocessor 600 through a data bus. Then, the microprocessor 600 performs an instruction corresponding to the instruction code. At this time, the trace analyzer 703 monitors the status signal to detect an occurrence of the fetch cycle, and supplies a strobe signal 711 to the trace memory 704 when the status signal is detected thereby. In response to the strobe signal 711, the trace memory 704 stores an instruction address supplied through an address bus during the instruction fetch cycle. After that, when all addresses of the instructions are stored in the trace memory 704, the trace is finished.

On the other hand, in case that the instruction cache 603 is used, an instruction address generated by the execution unit 601 is supplied to the instruction cache 603 through the internal address bus 605. At this time, when an instruction code corresponding to the supplied address has been already registered in the instruction cache 603 (hit state), the instruction cache 803 supplies the registered instruction code to the instruction decoder unit 602 directly. After that, the microprocessor 600 operates in the same manner as the above case that the instruction cache 603 is not used.

If an instruction code corresponding to the instruction address has not been registered in the instruction cache 603 (miss-hit state), the instruction cache 603 supplies a predetermined signal to the bus cycle control unit 604 when the instruction address is supplied to the cache 603 in order that an instruction code corresponding to the address is fetched from the external memory 702, and the fetched instruction code is registered in the instruction cache 603. In response to the predetermined signal, a replace cycle is started in the bus cycle control unit 604, so that an address signal and a status signal are supplied to the address terminal 607 and the status terminal 606, respectively. After that, the bus cycle control unit 604 is supplied with miss-hit instruction code from the data terminal 608, and the instruction code is registered in the instruction cache 603. After that, the registered instruction code is supplied to the instruction decoder unit 602, and the microprocessor 600 operates in the same manner as the above case.

According to the conventional microprocessor 600, however, there is a disadvantage in that a status signal of an instruction fetch cycle can not be detected by the tracer 701 (the trace analyzer 703), if an instruction code corresponding to the subsequent instruction has been already registered in the instruction cache 603. As a result, it is impossible that a trace of the microprocessor 600 is carried out in such case.

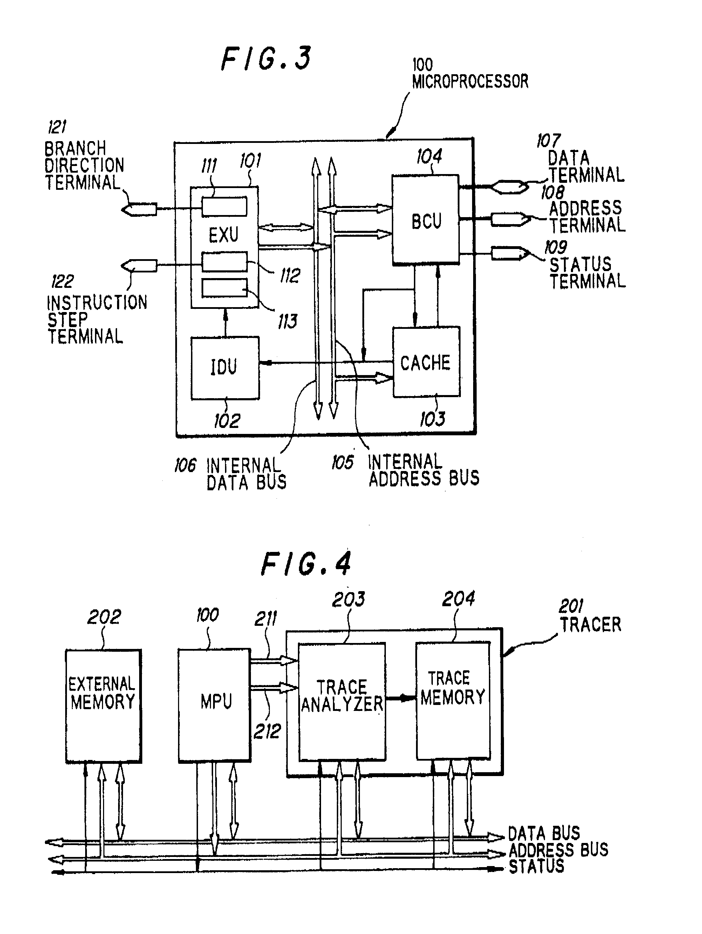

Next, a microprocessor 100 of a first preferred embodiment according to the invention will be explained in conjunction with Figs. 3 to 5.

Fig. 3 shows the microprocessor 100 which includes an execution unit (EXU) 101 for executing predetermined instructions, an instruction decode unit (IDU) 102 for decoding an instruction code, an instruction cache 103 for caching instruction codes, and a bus cycle control unit (BCU) 104 connected with a data terminal 107, an address terminal 108 and a status terminal 109, respectively. These units 101 to 104 are connected one another through an internal address bus 105 and an internal data bus 106. The execution unit 101 includes a branch direction detector 111 connected to a branch direction terminal 121 for detecting a branch direction of a branch instruction, a start detector 112 connected to an instruction step terminal 122 for detecting an execution start of each instruction, and a dynamic branch detector 113 for detecting a dynamic event such as an event in which a flow of a program can not be calculated in advance statically, as seen in an execution of a register indirect branch instruction, a branch to an exception processing program based on an occurrence of an exception, and the like.

In the microprocessor 100, the execution unit 101 generates an address of the subsequent instruction, and supplies the address to the instruction cache 103 through the internal address bus 105. At this time, if an instruction code corresponding to the address has been already registered in the instruction cache 103 (hit state), the instruction cache 103 supplies the instruction code to the instruction decoder unit 102. Then, the instruction decode unit 102 decodes the instruction code, and supplies a control signal to the execution unit 101. The execution unit 101 executes predetermined process in accordance with the control signal.

At this time, the start detector 112 supplies an instruction step signal to the instruction step terminal 122, each time when an execution start of an instruction is detected thereby. The branch direction detector 111 detects a branch direction ("materialization (YES)" or "non-materialisation (NO)") of a branch instruction, if the subsequent instruction is a branch instruction. When a dynamic event is detected by the dynamic branch detector 113, a trace-trap interrupt process starts. In the trace-trap interrupt process, a present program counter (PC) and a program status word (PSW) are evacuated, and they are branched to a predetermined address, so that the control is shifted to the trace-trap process.

Fig. 4 shows a trace system used for tracing the microprocessor 100, which includes an external memory 202, and a tracer 201 including a trace analyzer 203 for performing trace process and a trace memory 204 for storing instruction addresses detected by the trace analyzer 203. The microprocessor 100, the external memory 102, the trace analyzer 203 and the trace memory 204 are connected one another through a data bus, an address bus and a status line. The trace analyzer 203 of the tracer 201 is supplied with a branch direction signal 211 and an instruction step signal 212 from the branch direction terminal 121 and the instruction step terminal 122 of the microprocessor 100. The trace analyzer 203 has a function to statically analyzes a program stored in the external memory 202, so that flow of the instruction process can be extracted in accordance with the analysis, and static flow of the instruction process can be reproduced.

In the trace system, the trace analyzer 203 reads an execution program from the external memory 202 and analyzes it before the trace of an instruction code of the microprocessor 100. Therefore, information, for example a branch instruction address and the like which need for tracing, are stored in the trace analyzer 203.

After that, when the microprocessor 100 starts to execute an instruction program, the trace analyzer 203 monitors a replace bus cycle of the microprocessor 100 through the address bus and the status line. Then, the trace analyzer 203 detects an entry point of the executed program, and writes the address of the entry point into the trace memory 204 as a first trace effect,

After the replace bus cycle, the microprocessor 100 executes the instruction stored in the instruction cache 103, with supplying instruction step signals 212 to the trace analyzer 203. The trace analyzer 203 traces the instruction, one step by one step, by checking the analysis effect stored therein. Then, addresses of the traced instructions are written into the trace memory 204 as additional trace effect. Thus, trace of the program including an instruction cached in the instruction cache 103 can be carried out.

Next, operation of the trace system, in case that instruction column cached in the instruction cache 103 includes a conditional branch instruction, will be explained. Even if an address of the conditional branch instruction can be calculated statically, it is impossible to judge that the instruction flow will be materialized or not, so that an instruction cached in the instruction cache 103 can not be traced only in accordance with the instruction step signal 212. However, according to the first preferred embodiment, the microprocessor 100 supplies the branch direction signal 211 to the trace analyzer 203 of the tracer 201, so that an direction of the present branch instruction can be known. The trace analyzer 203 detects the direction of the branch instruction dynamically by monitoring the branch direction signal 211, so that a process of the conditional branch instruction cached in the instruction cache 103 can be traced.

Next, operation in case that a branch address can not be calculated statically, for example in case that a register indirect branch instruction is executed, will be explained. A register indirect branch instruction is an instruction in which a program is branched to a branch address corresponding to a value of the designated register. Generally, a value of a register can not be calculated by static analysis in advance, because the value is calculated in an execution step of the instruction.

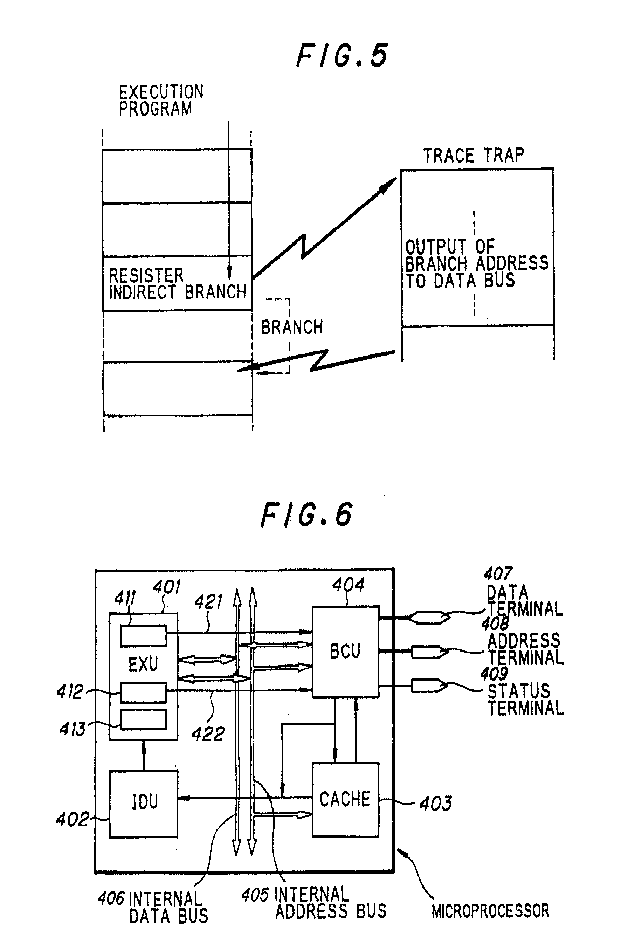

Fig. 5 shows an execution program of the microprocessor 100, including a register indirect branch instruction. In this example, it is supposed that all of the execution programs are cached in the instruction cache 103. In the trace system, the executing instruction is traced by the trace analyzer 203 in accordance with the instruction step 212 supplied from the microprocessor 100.

When the register indirect instruction is detected by the dynamic branch detector 113, the microprocessor 100 generates a trace trap process program, so that the control is shifted to the trace trap program. At this time, a branch address of the register indirect branch has been already determined. The microprocessor 100 dumps a value of the register storing the branch address to the data bus, so that the branch address of the register indirect branch can be supplied from the microprocessor 100 to an external unit. The trace analyzer 203 detects the trace trap process, and reads the branch address from the data bus. After that, the trace analyzer 203 performs the subsequent trace by using the detected branch address as a start point of the subsequent trace.

In this embodiment, the trace trap system is used for a register indirect branch instruction, however, the trace trap system may be used for another case, for example, the control is branched to an exception process program.

Fig. 6 shows a microprocessor 400 of a second preferred embodiment according to the invention. The microprocessor 400 includes an execution unit (EXU) 401 for executing an instruction, an instruction decode unit (IDU) 402 for decoding an instruction code, an instruction cache 403, and a bus cycle control unit (BCU) 404 connected with a data terminal 407, an address terminal 408 and a status terminal 409, respectively. These units 401 to 404 are connected through an internal address bus 405 and an internal data bus 406 to one another. The execution unit 401 includes a branch direction detector 411 for detecting a branch direction of a branch instruction, a start detector 412 for detecting an execution start of each instruction, and a dynamic branch detector 413 for detecting dynamic event.

In this embodiment, a branch direction signal and an instruction step signal are encoded by the bus cycle control unit 404, and the signals are supplied, as a part of status signal, to an external unit through a status signal line. Other operation is the same as the first preferred embodiment shown in Fig. 3.

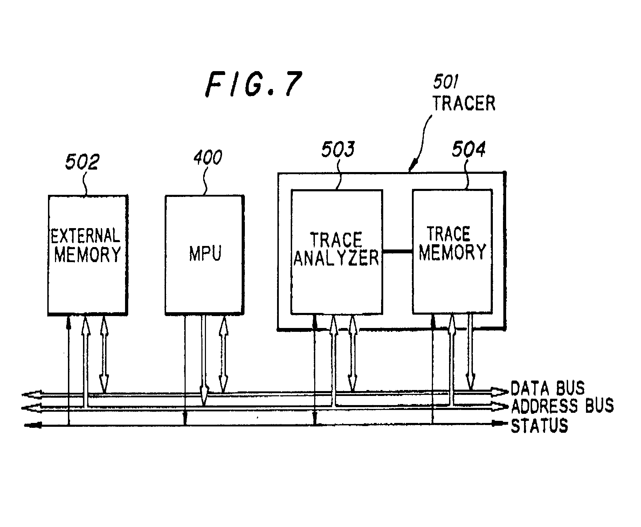

Fig. 7 shows a trace system used for tracing operation of the microprocessor 400. The system includes an external memory 502, and a tracer 501 which includes a trace analyzer 503 for performing trace process and a trace memory 504 for storing effect of the trace. The microprocessor 400, the external memory 502, the trace analyzer 503 and the trace memory 504 are connected one another through a data bus, an address bus and a status line, respectively. In the trace system, a branch direction information and an instruction step information are supplied from the microprocessor 400 to the trace analyzer 503 by using bus status signal without using special terminal and signal line. Other operation is the same as the first preferred embodiment shown in Fig. 4.

As described above, according to the first and second preferred embodiments, it is possible that a trace of the microprocessor is carried out, even if an instruction code corresponding to the instruction address supplied from the execution unit 101 (401) has been already registered in the instruction cache 103 (403).

Although the invention has been described with respect to specific embodiments for complete and clear disclosure, the appended claims are not to be thus limited and modification and alternative constructions that may occur to one skilled in the art are possible.

## Claims

1. A microprocessor, comprising:
an execution unit for supplying an address of a required instruction, and executing an instruction in accordance with an instruction code supplied thereto;
an internal cache for supplying an instruction code to said execution unit when said address supplied from said execution unit corresponds to an instruction code cached therein; and
a start detector for monitoring operation of said execution unit and supplying an instruction step signal to a predetermined tracer at each time when an execution start of each instruction in said execution unit is detected thereby.

2. A microprocessor, according to claim 1, further comprising:
a branch direction detector for detecting a branch direction of a branch instruction in said execution unit, and supplying a branch direction signal, indicating whether said branch instruction is materialized of not, to said predetermined tracer.

3. A microprocessor, according to claim 2, further comprising:
a dynamic branch detector for monitoring occurrence of a dynamic event in said execution unit, so that a present program of said execution unit is branched to a predetermined address and the control is transferred to a trace trap interrupt program when said dynamic event is detected thereby.

4. A microprocessor, according to claim 1 or 2, wherein:
said instruction step signal and said branch direction signal are supplied to said tracer by using external terminals, respectively.

5. A microprocessor, according to claim 1 or 2, wherein:
said instruction step signal and said branch direction signal are encoded and are supplied to said tracer through a status line without using external terminals, respectively.

6. In a microprocessor including an execution unit and a cache memory,
means for informing an exterior unit of an execution to be conducted in accordance a program;
means for informing said external unit of a branch direction of a branch instruction to be conducted in accordance with said program; and
means for generating an interrupt in case where a flow of said program is not calculated in advance statically.

7. In a microprocessor including an execution unit and a cache memory, according to claim 8,
said execution start informing means including an exclusive use terminal through which said execution start is supplied to said external unit.

8. In a microprocessor including an execution unit and a cache memory, according to claim 7,
said execution use terminal providing a pulse signal thereon, said pulse signal indicating said execution start.

9. In a microprocessor including an execution unit and a cache memory, according to claim 6,
said branch direction informing means including an exclusive use terminal through which said branch direction is supplied to said external unit.
